# EUROPÄISCHE PATENTSCHRIFT

(11) **EP 3 184 165 B1**
(45) Veröffentlichungstag und Bekanntmachung des Hinweises auf die Patenterteilung: **06.05.2020**
(21) Anmeldenummer: 16201121.7
(22) Anmeldetag: 29.11.2016
(51) Int. Cl.: B01F 7/00, B01F 7/16, B01F 15/00, B23B 31/30, F16D 1/00

(54) **SCHNELLWECHSELSYSTEM FÜR EINEN LABORMISCHER**
QUICK CHANGE SYSTEM FOR A LABORATORY MIXER
SYSTÈME DE CHANGEMENT RAPIDE POUR UN MÉLANGEUR DE LABORATOIRE

(30) Priorität: 15.12.2015 DE 102015225276
(43) Veröffentlichungstag der Anmeldung: 28.06.2017
(73) Patentinhaber: KNIELE GmbH, 88422 Bad Buchenau (DE); Universität Stuttgart, 70174 Stuttgart (DE)
(72) Erfinder: KNIELE, Harald, 88422 Bad Buchenau (DE); KNIELE, Alexander, 88422 Bad Buchenau (DE); BAUMERT, Christian, 73760 Ostfildern (DE); GARRECHT, Harald, 76297 Stutensee (DE)
(74) Vertreter: Prüfer & Partner mbB Patentanwälte · Rechtsanwälte

(56) Entgegenhaltungen:
- EP-A1- 0 659 471
- EP-A1- 2 886 228
- DE-A1-102006 016 290
- DE-U1- 8 518 206
- DE-U1-202015 004 682
- JP-U- H0 529 623

## Beschreibung

Die vorliegende Erfindung bezieht sich auf ein Schnellwechselsystem für einen Labormischer, wobei beim besagten Labormischer während oder kurz nach Abschluss des Mischvorgangs die rheologischen Eigenschaften von Medien erfasst werden können, um hieraus relevante Charakteristika zu bestimmen.

Besonders in der Betonindustrie ist eine Vorhersage von Eigenschaften von vermischten Medien äußerst wichtig, da die Bandbreite der Anforderungen an Betone in den vergangenen Jahrzehnten stetig gestiegen ist. Daher werden Betone nicht mehr als Drei-Phasen-Werkstoff aus Zement, Wasser und Gesteinskörnern, sondern als Fünf-Stoff-System gefertigt, weil zusätzlich zu diesen drei genannten Komponenten Zuschlagstoff und Zusatzmittel zum Einsatz kommen. Die für die unterschiedlichen Anforderungen zu findende Zusammensetzung des Betons ist hierbei sehr komplex, und allein die Erfahrung von Handwerkern ist hierfür längst nicht mehr ausreichend.

Da es in der Praxis wichtig ist, Mischungen herzustellen, bei denen eine ausreichende Durchmischung der verschiedenen Phasen/ Stoffe erzielt werden muss, ist es notwendig, die rheologischen Eigenschaften der Mischung zu bestimmen.

Eine Problematik, welche hierbei auftreten kann, ist die, dass sich einzelne Phasen schnell wieder entmischen können. Ebenfalls kann es bei bestimmten Medien möglich sein, dass Mischungen ihre rheologischen Eigenschaften in Abhängigkeit von der Mischzeit ändern.

Patentdokument DE 10 2006 016 290 A1 offenbart ein mehrteiliges Schaftwerkzeug mit einem Zentralkörper, welcher von einem Dehnspannfutter eingespannt werden kann.

Im Stand der Technik sind weiterhin verschiedene Labormischer bekannt, beispielsweise ein Mörtelmischer Typ Hobart oder ein Intensivmischer Typ Eirich. Bei diesen Mischern besteht jedoch das Problem, dass diese Mischer zwar für die Mischaufgabe geeignet und ausgelegt sind, jedoch für eine rheologische Messung ein Transfer des Mischgutes in ein gesondertes Rheometer erfolgen muss.

Um die Entmischung, welche in diesem Zeitraum stattfinden kann, zu verhindern, ist es Aufgabe der vorliegenden Erfindung, einen Labormischer sowie ein Verfahren zur Verfügung zu stellen, bei dem sowohl die Vermischung der zu mischenden Medien als auch die Erfassung der rheologischen Eigenschaften durchgeführt werden kann, wobei die Zeit zwischen Mischung und Rheologiemessung möglichst kurz gehalten werden soll.

Diese Aufgabe wird insbesondere durch einen Labormischer mit einem Schnellwechselsystem gemäß Anspruch 1, sowie durch ein System gemäß Anspruch 4 sowie durch Verfahren gemäß der Ansprüche 6 und 7 gelöst. Weitere vorteilhafte Ausgestaltungen der Erfindung sind Gegenstand der abhängigen Ansprüche.

Die Erfindung beinhaltet ein Schnellwechselsystem, mit welchem an den Antrieb des Mischers wahlweise ein Mischwerkzeug oder eine Vorrichtung zur Rheologiemessung gekoppelt und sehr schnell ausgetauscht werden kann. Da sowohl das Mischwerkzeug als auch die Vorrichtung zur Rheologiemessung aus einem inneren Werkzeug und einem äußeren Werkzeug bestehen, ist es wichtig, dass beide Werkzeuge sicher montiert sind, aber gleichzeitig schnell austauschbar sind.

Die Erfindung beinhaltet ein Schnellwechselsystem für einen Labormischer, welches aus einer Kupplungseinheit besteht. Es sind zwei Antriebe (zwei separate Motoren) vorhanden, wobei die Kupplungseinheit ein erstes und ein zweites Kupplungselement aufweist, welche jeweils von einer Antriebsvorrichtung angetrieben werden. Sowohl an das erste Kupplungselement als auch an das zweite Kupplungselement können verschiedene Werkzeuge befestigt werden, wobei an das erste Kupplungselement ein erster Verbindungsabschnitt des ersten Werkzeugs und an das zweites Kupplungselement ein zweiter Verbindungsabschnitt des zweiten Werkzeugs gekoppelt werden kann.

Das erste Kupplungselement ist hierbei vorzugsweise mit einem Aufnahmeelement versehen, welches an einem Ende eine hydraulische Spannhülse mit Schraube aufweist. Mit dieser Schraube kann der Öldruck in der hydraulischen Spannhülse variiert werden, womit ein Werkzeug mit erstem Verbindungsabschnitt fest mit dem ersten Kupplungselement verbunden werden kann bzw. die Verbindung wieder gelöst werden kann.

Außerhalb um das erste Kupplungselement herum ist das zweite Kupplungselement, welches eine Formschluss-Verbindungsvorrichtung aufweist, angeordnet, welches zur Aufnahme des zweiten Verbindungsabschnitts dient, an den sich das eigentliche Werkzeug anschließt. Das zweite Kupplungselement ist mit dem zweiten Verbindungsabschnitt vorzugsweise mit Hilfe eines oder mehrerer dafür angepasster Befestigungsmittel koppelbar und wieder lösbar. Die Drehachsen des ersten Kupplungselements 2 sowie des zweiten Kupplungselements 3 sind konzentrisch angeordnet.

Durch die Verwendung der Kupplungseinheit, bestehend aus erstem und zweitem Kupplungselement, ist ein sehr schneller Austausch von beiden Werkzeugen, sowohl am ersten Kupplungselement (durch Anziehen bzw. Lösen der hydraulischen Spannhülse) als auch am zweiten Kupplungselement (durch Anbringen oder Lösen weiterer Befestigungsmittel) möglich. Trotz der Möglichkeit des schnellen Auswechselns der Werkzeuge kann eine feste, stabile Verbindung hergestellt werden.

Im Folgenden wird ein bevorzugtes Ausführungsbeispiel unter Bezugnahme auf die beigefügten Zeichnungen näher erläutert.
- Fig. 1: zeigt eine Gesamtansicht der Kupplungseinheit, welche an der Unterseite eines Deckels von einem Mischer angebracht ist.
- Fig. 2: zeigt eine Einzelansicht des ersten Verbindungsabschnitts eines Werkzeugs, an welchem sich ein Werkzeug anschließt.
- Fig. 3: zeigt eine axiale Querschnittansicht des ersten Kupplungselementes inklusive montiertem ersten Verbindungsabschnitt.
- Fig. 4: zeigt eine radiale Querschnittansicht von Teilen des ersten Kupplungselementes.
- Fig. 5: zeigt eine Detailansicht des zweiten Kupplungselementes der ersten Ausführungsform (mit Einhängevorrichtung). Hierbei ist das Befestigungsmittel in montiertem Zustand gezeigt.
- Fig. 6: zeigt eine Einzelansicht des zweiten Verbindungsabschnitts der ersten Ausführungsform, an welchen sich ein Werkzeug anschließt.
- Fig. 7: zeigt eine seitliche Ansicht des zweiten Kupplungselementes und zweitem Verbindungsabschnitt in der zweiten Ausführungsform.
- Fig. 8: zeigt eine Draufsicht der Verbindungsvorrichtung des zweiten Kupplungselementes und zweitem Verbindungsabschnitt in der zweiten Ausführungsform.

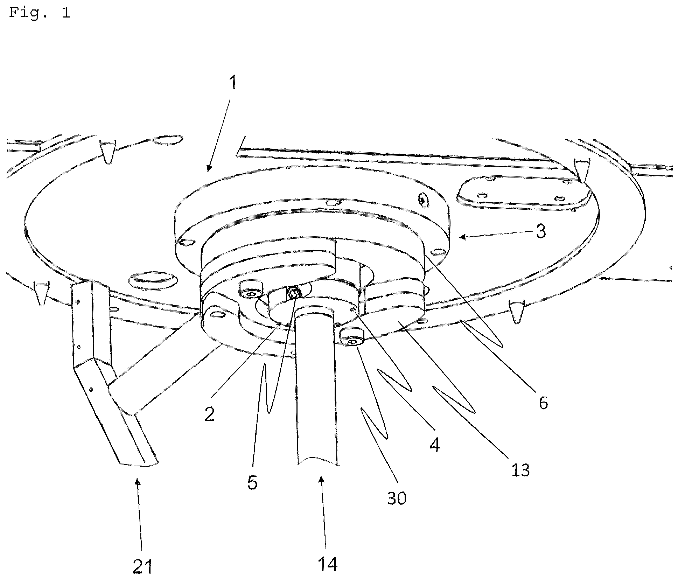

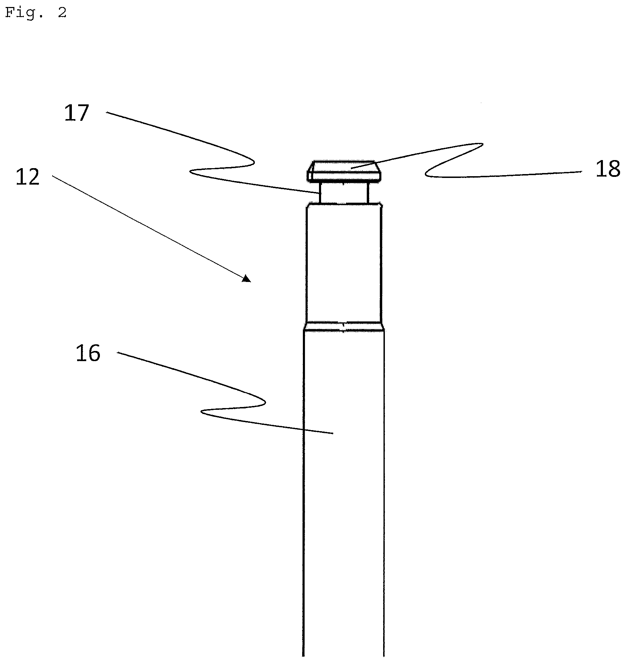

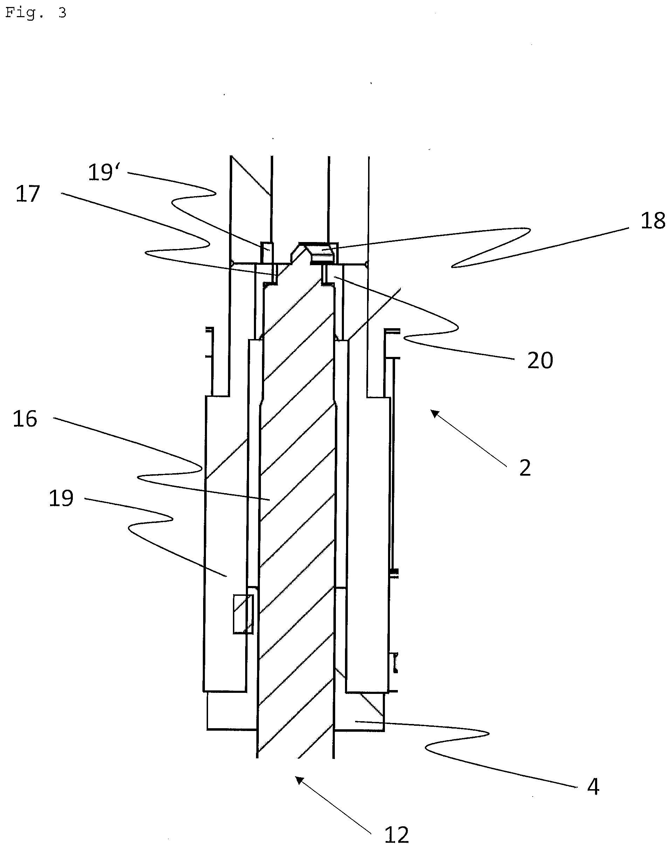

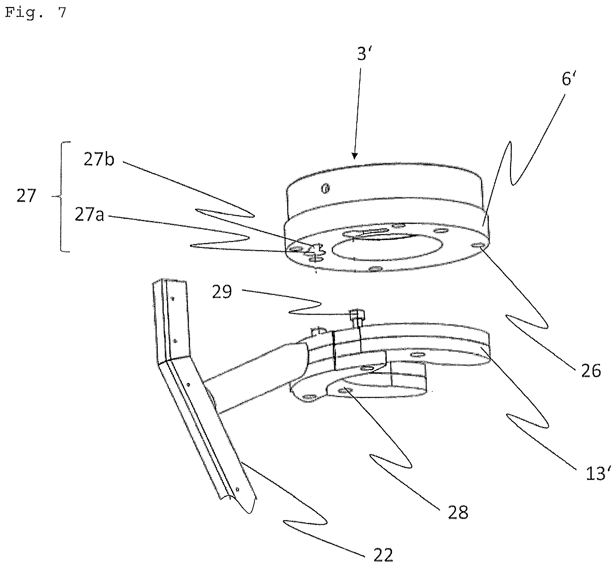

Wie in Fig. 1 gezeigt, besteht die Kupplungseinheit 1 aus einem drehbaren ersten Kupplungselement 2 (noch näher gezeigt in Fig. 3) und einem drehbaren zweiten Kupplungselement 3, welches in mehreren Ausführungsformen ausgestaltet sein kann. Das erste Kupplungselement 2 kann dabei einen ersten Verbindungsabschnitt 12 (siehe Fig. 2) eines Werkzeuges (zum Beispiel inneres Mischwerkzeug 14 oder inneres Werkzeug zur Rheologiemessung 15) aufnehmen, wobei die Verbindungsvorrichtung 6 des zweiten Kupplungselements 3 einen darauf angepassten zweiten Verbindungsabschnitt 13 eines anderen Werkzeuges (zum Beispiel äußeres Mischwerkzeug 21 oder äußeres Werkzeug zur Rheologiemessung 22) aufnehmen kann (siehe beispielsweise Fig. 7 für die erste Ausführungsform).

Weiterhin ist in Fig. 1 das erste Kupplungselement 2 zu sehen, welches im unteren Teil eine hydraulische Spannhülse 4 mit Schraube 5 beinhaltet, mittels der der hydraulische Druck einstellbar ist. Hier ist ferner schematisch zu erkennen, wie im ersten Kupplungselement 2 ein Werkzeug geklemmt ist.

Weiterhin ist in Fig. 1 ersichtlich, dass das zweite Kupplungselement 3 außerhalb des ersten Kupplungselementes 2 montiert werden kann, wodurch das im ersten Kupplungselement 2 montierte Werkzeug (zum Beispiel inneres Mischwerkzeug 14 oder inneres Werkzeug zur Rheologiemessung 15) nach unten durchgeführt werden kann. Somit befindet sich das im ersten Kupplungselement 2 montierte Werkzeug innerhalb von dem im zweiten Kupplungselement 3 montierten Werkzeug.

Fig. 2 zeigt einen ersten Verbindungsabschnitt 12 eines Werkzeugs. Hier ist zu erkennen, dass dieser erste Verbindungsabschnitt 12 einen ersten zylindrischen Abschnitt 16 (der in der vorliegenden Ausführungsform mit 2 geringfügig verschiedenen Durchmessern ausgebildet ist, wie in Fig. 2 ersichtlich) sowie einen zweiten zylindrischen Abschnitt 17, welcher einen geringeren Durchmesser als der erste zylindrische Abschnitt 16 besitzt, aufweist. An diesen zweiten zylindrischen Abschnitt 17 schließt sich ein stegförmiges, quer zur Zylinderachse verlaufendes Element 18 an.

Fig. 3 zeigt eine Querschnittansicht einer Verbindung von erstem Kupplungselement 2 mit dem erstem Verbindungsabschnitt 12 eines Werkzeugs. Hierbei ist erkennbar, dass die hydraulische Spannhülse 4 am unteren Ende des ersten Kupplungselementes 2 angeordnet ist. Darüber ist ein weiteres hohlzylindrisches Aufnahmeelement 19 angeordnet, welches eine Öffnung zur Aufnahme der hydraulischen Spannhülse 4 aufweist und welches im oberen Teil eine Aussparung 19' besitzt. Zwischen der Öffnung und der Aussparung 19' ist ein nach innen gerichteter Schulterabschnitt 20 vorgesehen, welcher dem Abstützen des stegförmigen Elements 18 des des ersten Verbindungsabschnittes (12) des ersten Werkzeugs im montierten Zustand diet. Die Öffnungen der hydraulischen Spannhülse 4 und des Aufnahmeelements 19 liegen koaxial übereinander. Das stegförmige Element 18 kann auf dem Schulterabschnitt 20 aufliegen, sofern es weit genug in das Aufnahmeelement 19 vorgeschoben ist. Somit wird das stegförmige Element 18 vom Schulterabschnitt 20 abgestützt, so dass der erste Verbindungsabschnitt 12 nicht mehr aus dem Aufnahmeelement 19 herausfallen kann.

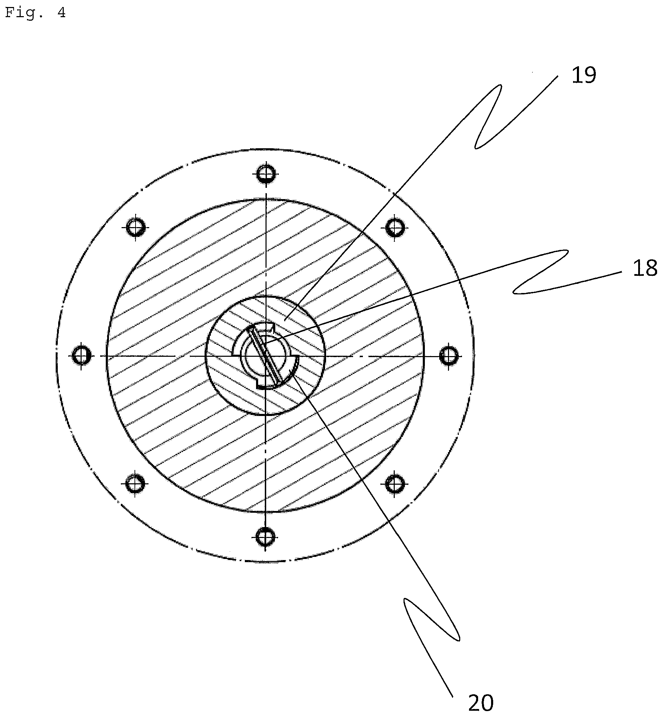

Fig. 4 verdeutlicht die Funktion des Festhaltens des stegförmige Elements 18 durch den Schulterabschnitt 20 im Aufnahmeelement 19.

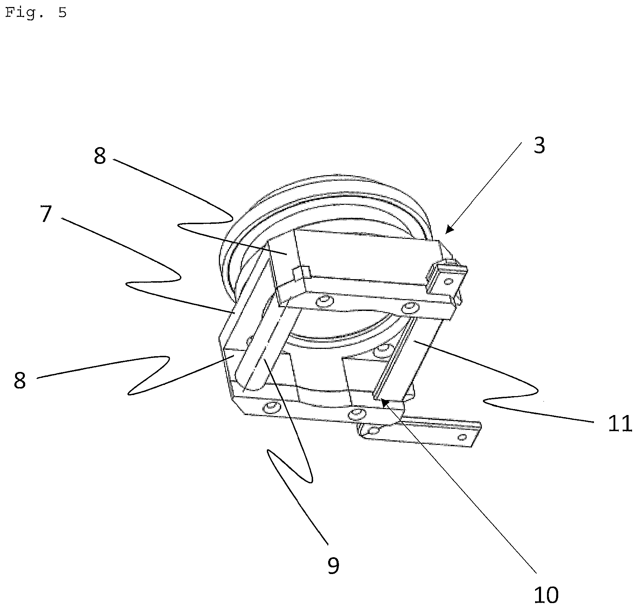

Fig. 5 zeigt eine genauere Ansicht der ersten Ausführungsform des zweiten Kupplungselementes 3 von unten.

Hier wird insbesonders ersichtlich, dass das zweite Kupplungselement 3 im Wesentlichen aus einer Deckelplatte 7 sowie zwei Seitenplatten 8 besteht. Beide Seitenplatten 8 sind durch die Deckelplatte 7 sowie ein stabförmiges Element 9 miteinander verbunden. Weiterhin weisen beide Seitenplatten 8 eine seitliche Aussparung 10 auf, in welche ein Befestigungselement 11 einschiebbar ist.

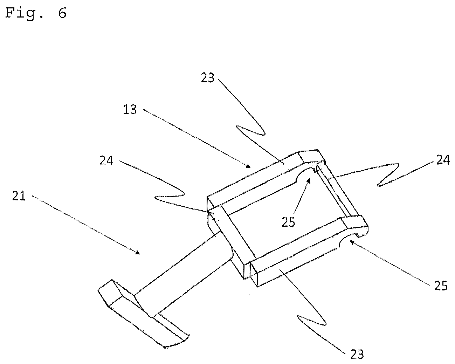

Fig. 6 zeigt den zweiten Verbindungsabschnitt 13 der ersten Ausführungsform. In diesem Fall ist der zweite Verbindungsabschnitt 13 mit dem äußeren Mischwerkzeug 21 verbunden, welches hier nur schematisch dargestellt ist. Der zweite Verbindungsabschnitt 13 besteht aus zwei im Wesentlichen parallel zueinander angeordnete Rahmenelementen 23, welche mit zwei Querstreben 24, 24 verbunden sind. An einem Ende der Rahmenelemente 23 und nahe einer Querstrebe ist in beiden Rahmenelementen 23 jeweils eine Aussparung 25 vorgesehen. Die Aussparung 25 ist dabei nahe derjenigen Querstrebe 24 vorgesehen, welche der anderen Querstrebe 24 gegenüberliegt, an welcher in diesem Fall das äußere Mischwerkzeug 21 befestigt ist. Eine Möglichkeit der Verbindung des zweiten Verbindungsabschnitts 13 mit dem zweiten Kupplungselementes 3 ist: Beide Rahmenelemente 23 des zweiten Verbindungsabschnittes 13 können in das zweite Kupplungselement 3 eingeschoben werden, so dass eine Aussparung 25 der Seitenplatten 23 des zweitem Verbindungsabschnittes 13 in Eingriff mit dem stabförmigen Element 9 des zweiten Kupplungselementes stehen. Das Befestigungselement 11 sichert die Rahmenelemente 23 des zweiten Verbindungsabschnittes 23 gegen Herausfallen nach unten und sichert so den zweiten Verbindungsabschnitt 13 im zweiten Kupplungselement 3.

Fig. 7 zeigt ein zweites Kupplungselement 3' mit einer Formschluss-Verbindungsvorrichtung 6' sowie einen zweiten Verbindungsabschnitt 13' in einer zweiten Ausführungsform. In der Formschluss-Verbindungsvorrichtung 6' des zweiten Kupplungselements 3' sind mehrere Gewindelöcher 26 sowie Langlöcher 27, aufweisend einen Abschnitt mit breitem Durchmesser 27a und einem Abschnitt mit schmalem Durchmesser 27b, vorgesehen. Im zweiten Verbindungsabschnitt 13', welcher in Fig. 7 mit dem äußeren Mischwerkzeug 22 verbunden ist, sind mehrere Durchgangslöcher 28 im gleichen Abstand wie die Gewindelöcher 26 in der Formschluss-Verbindungsvorrichtung 6' des zweiten Kupplungselements 3' vorgesehen. Auf der oberen Seite des zweiten Verbindungsabschnitts 13' sind mehrere, im vorliegenden Fall zwei Zylinderschrauben 29 befestigt. Dabei sind die Zylinderschrauben 29 so befestigt, dass sie den Langlöchern 27 gegenüberliegen, wenn die Formschluss-Verbindungsvorrichtung 6' des zweiten Kupplungselements 3' und der zweite Verbindungsabschnitt 13' miteinander in Verbindung gebracht werden. Die Gewindelöcher 26 und die Durchgangslöcher 28 sind ebenfalls in gleichem radialem Abstand angeordnet, so dass sich gegenüberliegen, wenn die Formschluss-Verbindungsvorrichtung 6' des zweiten Kupplungselements 3' und der zweite Verbindungsabschnitt 13' miteinander in Verbindung gebracht werden. In einem Gewindeloch 26 ist das Gewinde einer Passschraube 30 (hier nicht gezeigt) befestigbar, und die Durchgangslöcher 28 sind so ausgestaltet, dass eine Passschraube 30 hindurchgehen kann. Zudem ist der Durchmesser des Abschnitts mit breitem Durchmesser 27a des Langlochs 27 etwas größer als der Kopf der Zylinderkopfschrauben 29, und der Durchmesser des Abschnitts mit schmalem Durchmesser 27b ist etwas größer als der Schaft der Zylinderkopfschrauben 29, allerdings kleiner als der Kopf der Zylinderkopfschrauben 29.

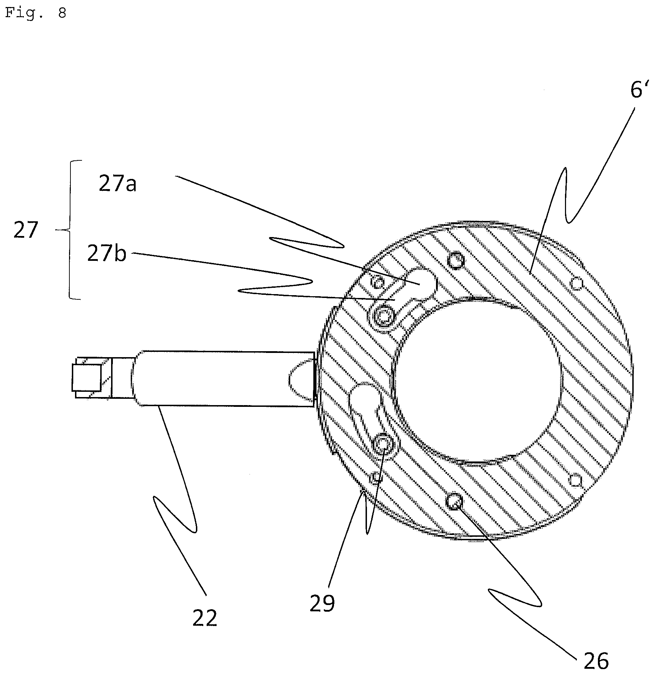

Fig. 8 zeigt eine Draufsicht auf die Formschluss-Verbindungsvorrichtung 6' des zweiten Kupplungselements 3' in der zweiten Ausführungsform. Dabei wird insbesondere die Position der am zweiten Verbindungsabschnitt 13' befestigten Zylinderschrauben 29 in den Langlöchern 27 deutlich.

Die Verwendung der Kupplungseinheit 1 mit erstem Kupplungselement 2 und zweitem Kupplungselement 3, welche jeweils an einen unterschiedlichen Antrieb gekoppelt sind, erlaubt die Verwendung eines Labormischers als Mischvorrichtung und als Rheometer. An das erste Kupplungselement 2 können über den ersten Verbindungsabschnitt 12 sowohl ein inneres Mischwerkzeug 14 als auch ein inneres Mischwerkzeug zur Rheologiemessung 15 angebracht werden, sofern sowohl das innere Mischwerkzeug 14 als auch das innere Werkzeug zur Rheologiemessung 15 den ersten Verbindungsabschnitt 12 aufweisen. Selbiges gilt für das zweite Kupplungselement 3, was über den zweiten Verbindungsabschnitt 13 mit einem äußeren Mischwerkzeug 21 sowie einem äußeren Werkzeug zur Rheologiemessung 22 verbunden werden kann, welche ebenfalls jeweils den entsprechenden zweiten Verbindungsabschnitt 13 aufweisen.

Für das erste Kupplungselement 2 ist eine sehr stabile und auch schlupffreie Verbindung nötig. Um hier einen einfachen Wechsel des Werkzeuges vornehmen zu können, dient der Mechanismus mit dem Aufnahmeelement 19 und des Schulterabschnitts 20 zum ersten, vorläufigen Fixieren des ersten Verbindungsabschnittes 12 mit Hilfe des stegförmigen Elementes 18. Dazu wird der erste Verbindungsabschnitt 12 durch die hydraulische Spannhülse 4 in das Aufnahmeelement 19 eingesteckt und nach oben geschoben, bis der äußere Rand des ersten zylindrischen Elements 16 an dem Schulterabschnitt 20 anschlägt. Dann kann der erste Verbindungsabschnitt 12 verdreht werden, so dass sich das stegförmige Element 18 kreisförmig bewegt, bis es auf dem Schulterabschnitt 20 aufliegt und somit nicht mehr nach unten herausfallen kann. Die kraftschlüssige Verbindung, welche für einen Antrieb des inneren Mischwerkzeugs 14 sowie des inneren Werkzeugs zur Rheologiemessung 15 notwendig ist, erfolgt durch Einstellen der hydraulischen Spannhülse 4 mit der Schraube 5, so dass der erste stabförmige Abschnitt 16 des ersten Verbindungsabschnitts 12 fest in der hydraulischen Spannhülse 4 geklemmt ist.

Beim zweiten Kupplungselement 3 in der ersten Ausführungsform sorgt bereits das Einklemmen des zweiten Verbindungsabschnittes 13 mit seinen Rahmenelementen 23 in die Seitenplatten 8 für eine ausreichende Klemmung. Der zweite Verbindungsabschnitt 13 wird daher seitlich in das zweite Kupplungselement 3 eingeschoben oder auch eingehängt, bis die Aussparung 25 des zweiten Verbindungsabschnittes 13 in Eingriff mit dem stabförmigen Element 9 des zweiten Kupplungselementes 3 steht. Zum Sichern des zweiten Verbindungsabschnittes 13 vor Herausfallen nach unten kann ein Befestigungselement 11 in dafür vorhergesehene Aussparungen 10 in den Seitenplatten 8 eingesteckt bzw. eingeschoben werden.

Die Erfindung ist nicht auf die vorliegende Ausführungsform beschränkt. Beispielsweise ist im ersten Kupplungselement die Vorrichtung zum vorläufigen Halten eines eingesteckten ersten Verbindungsabschnitts 12 nicht auf die Lösung mit einem stegförmigem Element 18 des ersten Verbindungsabschnittes sowie des Schulterabschnitts 20 des ersten Kupplungselementes 2 beschränkt. Denkbar wären zum Beispiel auch Clipverbindungen mit Federn im oberen Bereich des Aufnahmeelementes 19 mit der Aussparung 19', welche einen eingesteckten ersten Verbindungsabschnitt 12 vorläufig gegen Herausfallen sichern könnten.

Der erste Verbindungsabschnitt 12 ist nicht auf die runde Bauform beschränkt. Genauso gut denkbar wären hier vier- oder mehreckige Bauformen, wobei dann ebenfalls die hydraulische Spannhülse 4 sowie das Aufnahmeelement 19 entsprechend angepasst werden müssten.
Für das zweite Kupplungselement 3 sowie den zweiten Verbindungsabschnitt 13 sind ebenfalls weitere Ausführungsformen denkbar: Beispielsweise sind hier Lösungen mit Paßfedern und entsprechender Paßfedernuten denkbar, zudem verschiedene Fixierungsmöglichkeiten mit Schrauben.
Weiterhin ist die Ausgestaltung des zweiten Verbindungsabschnitts 13 als Schlüsselplatte und die Ausgestaltung des zweiten Kupplungselements 3 als Gegenstück zur Schlüsselplatte denkbar. Eine Arretierung bzw. Befestigung könnte hier mit Schrauben oder Riegeln erfolgen.

Im Folgenden soll noch das Verfahren zum Herstellen und Lösen der Verbindungen von erstem Kupplungselement 2 und erstem Verbindungsabschnitt 12 sowie zweitem Kupplungselement 3 und zweitem Verbindungsabschnitt 13 gemäß der ersten Ausführungsform erläutert werden. Ein Werkzeug mit erstem Verbindungsabschnitt 12 wird von unten in die hydraulische Spannhülse 4 eingeführt und in das Aufnahmeelement 19 vorgeschoben. Nach weiterem Vorschieben des ersten Verbindungsabschnitts 12 stößt das obere Ende des ersten zylindrischen Abschnitts 16 an den Schulterabschnitt 20, welcher im Aufnahmeelement 19 vorgesehen ist, an. Daraufhin muss der gesamte erste Verbindungsabschnitt 12 in beide Richtungen verdreht werden, um zu prüfen, ob das stegförmige Element 18 eventuell in einer anderen Position noch durch den Schulterabschnitt 20 hindurchrutschen kann. Ist das stegförmige Element 18 in seiner obersten Position angekommen, kann der erste Verbindungsabschnitt 12 verdreht werden, so dass das stegförmige Element 18 des ersten Verbindungsabschnittes 12 in Anlage zum Schulterabschnitt 20 des ersten Kupplungselementes 2 steht. Um eine kraftschlüssige Verbindung herzustellen, wird an der Spannhülse 4 der Druck durch Verstellen der Schraube 5 so weit erhöht, dass eine kraftschlüssige Klemmverbindung zwischen der hydraulischen Spannhülse 4 und dem ersten zylindrischen Abschnitt 16 des ersten Verbindungsabschnittes 12 zustande kommt. Soll diese Verbindung wieder gelöst werden, so ist der Druck in der hydraulischen Spannhülse 4 durch die Schraube 5 zu reduzieren, der erste Verbindungsabschnitt 12 ist so weit zu verdrehen, bis das stegförmige Element 18 nicht mehr mit dem Schulterabschnitt 20 in Eingriff steht und somit der erste Verbindungsabschnitt 12 nach unten aus dem Aufnahmeelement 19 inklusive der hydraulischen Spannhülse 4 gezogen werden kann.

Hinsichtlich der Verbindung des zweiten Kupplungselementes 3 mit dem zweiten Verbindungsabschnitt 13 in der ersten Ausführungsform ist das zweite Kupplungselement 3 vorläufig ohne Befestigungselement 11 zu verwenden. Es gibt hier nun zwei Möglichkeiten zum Befestigen oder Entfernen des zweiten Verbindungsabschnittes 13.

Eine Möglichkeit besteht darin, dass der zweite Verbindungsabschnitt 13 mit seinen Aussparungen 25 in den Rahmenelementen 23 in das stabförmige Element 9 eingehängt wird. Eine erste Verbindung ist so schon einmal geschaffen.

Im Anschluss darauf wird der zweite Verbindungsabschnitt 13 in einer Rotationsbewegung um das stabförmige Element 9 des zweiten Kupplungselementes 3 rotiert, bis der zweite Verbindungsabschnitt 13 mit seinen Rahmenelementen 23 an der Deckelplatte 7 des zweiten Kupplungselementes 3 anstößt. Daraufhin wird das Befestigungselement 11 in die hierfür vorhergesehenen Aussparungen 10 in den Seitenplatten 8 des zweiten Kupplungselementes 2 geschoben. Soll dies wiederum gelöst werden, wird das Befestigungselement 1 wieder aus den Aussparungen 12 in den Seitenplatten 8 des zweiten Kupplungselementes 3 herausgezogen, und der zweite Verbindungsabschnitt 13 wird in einer Rotationsbewegung um das stabförmige Element 9 nach unten bewegt, bis der zweite Verbindungsabschnitt 2 ausgehängt werden kann.

Eine weitere Möglichkeit besteht darin, dass bei entferntem Befestigungselement 11 der zweite Verbindungsabschnitt 13 seitlich quer zwischen beide Seitenplatten 8 des zweiten Kupplungselementes 3 geschoben wird. Dabei ist der zweite Verbindungsabschnitt 13 so weit vorzuschieben, bis die Aussparungen 25 in den Rahmenelementen 23 des zweiten Verbindungsabschnittes 13 mit dem stabförmigen Element 9 des zweiten Kupplungselements 3 in Eingriff stehen und so einrasten können. Der zweite Verbindungsabschnitt 13 wird dann im Wesentlichen parallel zur Deckelplatte 7 des zweiten Kupplungselementes 3 gehalten, und das Befestigungselement 11 wird in die Aussparungen 10 in den Seitenplatten 8 des zweiten Kupplungselementes 3 geschoben. Zum Lösen dieser Verbindung wird in diesem Fall das Befestigungselement 11 entfernt, und der zweite Verbindungsabschnitt 13 wird leicht angehoben, so dass die Aussparung 25 in den Rahmenelementen 23 des zweiten Verbindungsabschnittes 13 nicht immer in Eingriff mit dem stabförmigen Element 9 des zweiten Kupplungselementes 3 stehen. Der zweite Verbindungsabschnitt 13 kann dann seitlich vertikal zwischen den beiden Seitenplatten 8 des zweiten Kupplungselementes 3 herausgezogen werden.

Bei der zweiten Ausführungsform des zweiten Kupplungselements 3 und des zweiten Verbindungsabschnitts 13 sind die Formschluss-Verbindungsvorrichtung 6 des zweiten Kupplungselements 3 und der zweite Verbindungsabschnitt 13 so gegenüberliegend zu positionieren, dass die Köpfe der Zylinderkopfschrauben 29 gegenüber von den Abschnitten mit breitem Durchmesser 27a der Langlöcher 27 positioniert sind. Der gesamte zweite Verbindungsabschnitt 13 ist nach oben zu schieben, so dass die Zylinderkopfschrauben 29 in die Abschnitte mit breitem Durchmesser 27a der Langlöcher 27 eindringen und durch diese mit deren Kopf hindurchgehen. Anschließend ist der gesamte zweite Verbindungsabschnitts 13 so zu verdrehen, dass die Schäfte der Zylinderkopfschrauben 29 mit den Abschnitten mit schmalem Durchmesser 27b der Langlöcher 27 in Eingriff stehen und somit der zweite Verbindungsabschnitts 13 gegen Herausfallen gesichert ist. Anschließend wird die Verbindung durch Durchstecken von Passschrauben 30 durch die Durchgangslöcher 28 des zweiten Verbindungsabschnitts 13 sowie das Verschrauben der Passschrauben 30 in den Gewindelöchern 26 der Verbindungsvorrichtung 6 des zweiten Kupplungselements 3 fixiert.
Das Lösen der Verbindung zwischen zweitem Kupplungselement 3 zweitem Verbindungsabschnitts 13 erfolgt analog.

## Patentansprüche

1. Schnellwechselsystem für einen Labormischer, aufweisend eine Kupplungseinheit (1) mit mindestens zwei drehbaren Kupplungselementen (2, 3) für zwei Werkzeuge, wobei
das erste Kupplungselement (2) eine hydraulische Spannhülse (4) umfasst, zur klemmbaren Befestigung eines ersten Verbindungsabschnitts (12) eines ersten Werkzeugs,
und das zweite Kupplungselement (3) eine Formschluss-Verbindungsvorrichtung (6) aufweist, zur Befestigung eines zweiten Verbindungsabschnitts (13) eines zweiten Werkzeugs,
wobei die Drehachsen der beiden Kupplungselemente (2,3) konzentrisch angeordnet sind und das zweite Kupplungselement (3) außerhalb um das erste Kupplungselement (2) herum angeordnet ist.

2. Schnellwechselsystem gemäß Anspruch 1, wobei die hydraulische Spannhülse (4) des ersten Kupplungselements (2) eine Schraube (5) aufweist, mittels der der hydraulische Druck einstellbar ist.

3. Schnellwechselsystem gemäß einem der Ansprüche 1 oder 2, wobei für das erste Kupplungselement (2) und für das zweite Kupplungselement (3) jeweils separate Motoren vorgesehen sind.

4. System aus Schnellwechselsystem nach einem der vorhergehenden Ansprüche und erstem Verbindungsabschnitt (12) des ersten Werkzeugs, wobei der erste Verbindungsabschnitt (12) einen zylindrischen Abschnitt (17) aufweist, an dessen Ende ein stegförmiges, quer zur Zylinderachse verlaufendes Element (18) vorgesehen ist.

5. System gemäß dem vorhergehenden Anspruch, wobei das erste Kupplungselement (2) ein hohlzylindrisches Aufnahmeelement (19) aufweist, mit einer Öffnung zur Aufnahme der hydraulischen Spannhülse (4) sowie zum Einführen des ersten Verbindungsabschnittes (12) des ersten Werkzeugs, sowie mit einem in einem distalen Abstand von der Öffnung angeordneten nach innen gerichteten Schulterabschnitt (20) zum Abstützen des stegförmigen Elements (18) im montierten Zustand.

6. Verfahren zum Herstellen der Verbindungen eines Systems gemäß Anspruch 4 oder 5, umfassend die folgenden Schritte:
a) Herstellen der Verbindung:
- Einführen eines Werkzeuges mit erstem Verbindungsabschnitt (12) in die hydraulische Spannhülse (4) von unten;
- Vorschieben des Werkzeuges mit erstem Verbindungsabschnitt (12) in das hohlzylindrische Aufnahmeelement (19);
- Bei Anstoßen des oberen Endes des ersten zylindrischen Abschnittes (16) des ersten Verbindungsabschnitts (12) am Schulterabschnitt (20), welche im hohlzylindrischen Aufnahmeelement (19) vorgesehen ist, Verdrehen des ersten Verbindungsabschnitts (12), um zu prüfen, ob das stegförmige Element (18) in einer anderen Drehposition durch die durch den Schulterabschnitt (20) hervorgerufenen Verengung hindurchrutschen kann und weiter nach oben geschoben werden kann; evtl. weiteres nach oben Schieben des ersten Verbindungsabschnitts (12) ;
- Festklemmen des ersten Verbindungsabschnitts (12) durch Erhöhen des Druckes der Spannhülse (4) durch Drehen der Schraube (5)
b) Herstellung der zweiten Verbindung von zweitem Kupplungselement (3) und zweitem Verbindungsabschnitt (13).

7. Verfahren zum Lösen der Verbindungen eines Systems gemäß Anspruch 4 oder 5, umfassend die folgenden Schritte:
a)
- Lösen der Spannhülse (4) durch Reduzieren des Drucks in der hydraulischen Spannhülse (4) durch Drehen der Schraube (5) in die entgegengesetzte Richtung;
- Verdrehen des ersten Verbindungsabschnitts (12), bis das stegförmige Element (18) nicht mehr mit dem Schulterabschnitt (20) in Eingriff steht;
- Herausziehen des ersten Verbindungsabschnitts (12) nach unten;
b) Lösen der zweiten Verbindung von zweitem Kupplungselement (3) und zweitem Verbindungsabschnitt (13).

## Claims

1. Quick-change system for a laboratory mixer, comprising
a coupling unit (1) with at least two rotatable coupling elements (2, 3) for two tools, wherein
the first coupling element (2) comprises a hydraulic clamping sleeve (4) for clampably fastening a first connecting portion (12) of a first tool,
and the second coupling element (3) has a form-locking connection device (6) for fastening a second connecting portion (13) of a second tool,
wherein the axes of rotation of the two coupling elements (2, 3) are arranged concentrically and the second coupling element (3) is arranged externally around the first coupling element (2).

2. Quick-change system according to claim 1, wherein the hydraulic clamping sleeve (4) of the first coupling element (2) has a screw (5) by means of which the hydraulic pressure is adjustable.

3. Quick-change system according to one of claims 1 or 2, wherein separate motors are provided for the first coupling element (2) and for the second coupling element (3) respectively.

4. System comprising a quick-change system according to one of the preceding claims and a first connecting portion (12) of the first tool, wherein the first connecting portion (12) has a cylindrical section (17) at the end of which a strut-shaped element (18) extending transversely to the cylinder axis is provided.

5. System according to the preceding claim, wherein the first coupling element (2) comprises a hollow cylindrical receiving element (19) with an opening for receiving the hydraulic clamping sleeve (4) and for inserting the first connecting portion (12) of the first tool, and with an inwardly directed shoulder portion (20) arranged at a distal distance from the opening for supporting the strut-shaped element (18) in the mounted state.

6. Method of establishing the connections of a system according to claim 4 or 5, comprising the following steps:
a) Establishing the connection:
- inserting a tool with a first connection portion (12) into the hydraulic clamping sleeve (4) from below;
- advancing the tool with the first connection portion (12) into the hollow cylindrical receiving element (19);
- when the upper end of the first cylindrical portion (16) of the first connecting portion (12) abuts the shoulder portion (20) provided in the hollow cylindrical receiving element (19), rotating the first connecting portion (12) to check whether the strut-shaped element (18) can slip through the narrowing caused by the shoulder portion (20) in another rotational position and be pushed further upwards; possibly pushing the first connecting portion (12) further upwards;
- clamping the first connecting portion (12) by increasing the pressure of the clamping sleeve (4) by turning the screw (5)
b) Establishing of the second connection of second connection element (3) and second connection portion (13).

7. Method for loosening the connections of a system according to claim 4 or 5, comprising the following steps:
- releasing the clamping sleeve (4) by reducing the pressure in the hydraulic clamping sleeve (4) by rotating the screw (5) in the opposite direction;
- rotating the first connecting portion (12) until the strut-shaped member (18) is no longer engaged with the shoulder portion (20);
- pulling the first connecting portion (12) downwards
b) loosening of the second connection of second coupling element and second connection portion (13).

## Revendications

1. Système de changement rapide pour un mélangeur de laboratoire, présentant une unité de couplage (1) avec au moins deux éléments de couplage (2, 3) pouvant tourner pour deux outils, dans lequel
le premier élément de couplage (2) comprend une douille de serrage (4) hydraulique, pour la fixation par serrage d'une première section de liaison (12) d'un premier outil,
et le deuxième élément de couplage (3) présente un dispositif de liaison à complémentarité de forme (6), pour la fixation d'une deuxième section de liaison (13) d'un deuxième outil,
dans lequel les axes de rotation des deux éléments de couplage (2, 3) sont disposés de manière concentrique et le deuxième élément de couplage (3) est disposé à l'extérieur tout autour du premier élément de couplage (2).

2. Système de changement rapide selon la revendication 1, dans lequel la douille de serrage (4) hydraulique du premier élément de couplage (2) présente une vis (5), au moyen de laquelle la pression hydraulique peut être réglée.

3. Système de changement rapide selon l'une quelconque des revendications 1 ou 2, dans lequel respectivement des moteurs séparés sont prévus pour le premier élément de couplage (2) et pour le deuxième élément de couplage (3).

4. Système composé du système de changement rapide selon l'une quelconque des revendications précédentes et d'une première section de liaison (12) du premier outil, dans lequel la première section de liaison (12) présente une section cylindrique (17), au niveau de l'extrémité de laquelle est prévu un élément (18) en forme d'entretoise s'étendant de manière transversale par rapport à l'axe de cylindre.

5. Système selon la revendication précédente, dans lequel le premier élément de couplage (2) présente un élément de réception (19) cylindrique creux, avec une ouverture pour recevoir la douille de serrage (4) hydraulique et pour introduire la première section de liaison (12) du premier outil, ainsi qu'avec une section d'épaulement (20) disposée à une distance distale de l'ouverture, dirigée vers l'intérieur, pour soutenir l'élément (18) en forme d'entretoise dans l'état monté.

6. Procédé de fabrication des liaisons d'un système selon la revendication 4 ou 5, comprenant les étapes suivantes :
a) d'établissement de la liaison :
- d'introduction d'un outil par une première section de liaison (12) dans la douille de serrage (4) hydraulique par le bas ;
- de glissement vers l'avant de l'outil par une première section de liaison (12) dans l'élément de réception (19) cylindrique creux ;
- en cas de butée de l'extrémité supérieure de la première section (16) cylindrique de la première section de liaison (12) contre la section d'épaulement (20), laquelle est prévue dans l'élément de réception (19) cylindrique creux, de rotation de la première section de liaison (12) afin de vérifier si l'élément (18) en forme d'entretoise peut traverser le rétrécissement provoqué par la section d'épaulement (20) dans une autre position de rotation et peut être glissé davantage vers le haut ; éventuellement
de glissement davantage vers le haut de la première section de liaison (12) ;
- d'immobilisation de la première section de liaison (12) en augmentant la pression de la douille de serrage (4) en faisant tourner la vis (5)
b) d'établissement de la deuxième liaison entre le deuxième élément de couplage (3) et la deuxième section de liaison (13).

7. Procédé pour desserrer les liaisons d'un système selon la revendication 4 ou 5, comprenant les étapes suivantes :
a)
- de desserrage de la douille de serrage (4) en réduisant la pression dans la douille de serrage (4) hydraulique en faisant tourner la vis (5) dans la direction opposée ;
- de rotation de la première section de liaison (12) jusqu'à ce que l'élément (18) en forme d'entretoise ne soit plus en prise avec la section d'épaulement (20) ;
- de retrait de la première section de liaison (12) vers le bas ;
b) de desserrage de la deuxième liaison entre le deuxième élément de couplage (3) et la deuxième section de liaison (13).
